# EUROPEAN PATENT APPLICATION

(11) **EP 3 800 846 A1**
(43) Date of publication of application: **07.04.2021**
(21) Application number: 19819974.7
(22) Date of filing: 23.05.2019
(51) Int. Cl.: H04L 12/911

(54) **RESOURCE RESERVATION METHOD AND APPARATUS**

(30) Priority: 12.06.2018 CN 201810603692
(71) Applicant: Huawei Technologies Co., Ltd., Longgang District Shenzhen, Guangdong 518129 (CN)
(72) Inventor: LIU, Bingyang, Shenzhen, Guangdong 518129 (CN); QIANG, Li, Shenzhen, Guangdong 518129 (CN); YU, Delei, Shenzhen, Guangdong 518129 (CN); MENG, Rui, Shenzhen, Guangdong 518129 (CN); LIU, Yang, Shenzhen, Guangdong 518129 (CN); WANG, Chuang, Shenzhen, Guangdong 518129 (CN)
(74) Representative: Gill Jennings & Every LLP
(86) International application number: PCT/CN2019/088183
(87) International publication number: WO 2019/237904

(57) **Abstract**

This application provides a resource reservation method and an apparatus. The method includes: receiving, by a node, a first message, where the first message carries a bandwidth value r1 of a resource requested to be reserved and a quantity Q1 of cycles occupied by the resource, the node maintains resource reservation states in K cycles, K is a positive integer, and Q1 is less than or equal to K; and updating, by the node, resource reservation states in Q1 of the K cycles based on the bandwidth value r1 and the quantity Q1. The node maintains the resource reservation states at a granularity of cycles. Therefore, the resource reservation states that need to be maintained by the node do not depend on a quantity of data flows processed by the node, and a performance requirement of a resource reservation for the node can be lowered.

## Description

This application claims priority to Chinese Patent Application No. 201810603692.7, filed with the Chinese Patent Office on June 12, 2018 and entitled "RESOURCE RESERVATION METHOD AND APPARATUS", which is incorporated herein by reference in its entirety.

### TECHNICAL FIELD

This application relates to the field of communications technologies, and specifically, to a resource reservation method and an apparatus.

### BACKGROUND

For a special service that has a relatively high requirement for network quality of service (Quality of Service, QoS), such as remote industrial control or VR communication, to ensure network quality of service, resources in a data plane need to be reserved for a data flow of the special service along the way. The resource reservation protocol (Resource Reservation Protocol, RSVP) rises just to meet such a requirement.

The RSVP is used to make a resource reservation for a flow (flow) along a path of the flow, to meet a QoS requirement of the flow. A basic process of a resource reservation is as follows: A source node of an application flow sends a path (path) message, where the path message is delivered to a destination node of the flow along a path of the flow, and path states are established along the path. After receiving the path message, the destination node returns a reservation (Resv) message to the source node, where the Resv message is used to indicate a resource that needs to be reserved, and a node along the path makes a resource reservation based on the Resv message. If the source node successfully receives the Resv message, it is considered that a resource reservation on the entire path succeeds. After the resource reservation, the node along the path maintains such a state until the application releases these resources. This provides a guaranteed data flow service for a particular application (for example, remote industrial control or VR).

Currently, in a resource reservation process, a node that makes a resource reservation needs to maintain a resource reservation state for each data flow in a control plane. When there is a large quantity of data flows in a network, the node needs to maintain a large amount of information, which imposes a relatively high requirement on performance of the node and is not conducive to network scalability.

### SUMMARY

This application provides a resource reservation method and an apparatus, to effectively lower a performance requirement of a resource reservation for a node.

According to a first aspect, a resource reservation method is provided, and the method includes: receiving, by a node, a first message, where the first message carries a bandwidth value r1 of a resource requested to be reserved and a quantity Q1 of cycles occupied by the resource, the node maintains resource reservation states in K cycles, K is a positive integer, and Q1 is less than or equal to K; and updating, by the node, resource reservation states in Q1 of the K cycles based on the bandwidth value r1 and the quantity Q1.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered.

It should be understood that, the solution of this application can lower the performance requirement of the resource reservation for the node, and can further improve network scalability.

Optionally, the quantity K of cycles in which the node maintains the resource reservation states may be determined based on a performance status of the node. For example, if a storage capability or a data processing capability of the node can allow the node to maintain resource reservation states in 10 cycles at the same time, the quantity K of cycles in which the node maintains the resource reservation states may be set to 10.

Optionally, the quantity K of cycles in which the node maintains the resource reservation states may alternatively be determined based on a network status or another factor. This is not limited in this application.

Optionally, the quantity K of cycles in which the node maintains the resource reservation states may be preset, or may be configured for the node in real time.

Optionally, duration of the cycle (cycle) in this application is greater than or equal to a round-trip time (Round-Trip Time, RTT) of a transmission path of a data flow for which a resource reservation is requested.

Optionally, the resource in this application may be a bandwidth resource, or may be another type of resource. For example, the resource in this application may alternatively be a burst traffic byte quantity resource. It should be understood that, in an actual operation, a burst traffic byte quantity may also be converted into a bandwidth. For another example, the resource in this application may alternatively be a memory resource. For another example, the resource in this application represents a resource in a time dimension.

Optionally, the node may locally maintain the resource reservation states in the K cycles.

Optionally, the node may maintain the resource reservation states in the K cycles on a server.

With reference to the first aspect, in a possible implementation of the first aspect, a resource reservation state in each of the K cycles is determined based on a total bandwidth of resources that have been reserved by the node in each cycle.

With reference to the first aspect, in a possible implementation of the first aspect, the resource reservation state in each of the K cycles is the total bandwidth of the resources that have been reserved by the node in each cycle; and the updating, by the node, resource reservation states in Q1 of the K cycles based on the bandwidth value r1 and the quantity Q1 includes: adding, by the node, the bandwidth value r1 to a bandwidth value corresponding to a resource reservation state in each of the Q1 cycles.

With reference to the first aspect, in a possible implementation of the first aspect, the resource reservation state in each of the K cycles is a total bandwidth of remaining available resources of the node in each cycle; and the updating, by the node, resource reservation states in Q1 of the K cycles based on the bandwidth value r1 and the quantity Q1 includes: subtracting, by the node, the bandwidth value r1 from a bandwidth value corresponding to a resource reservation state in each of the Q1 cycles.

With reference to the first aspect, in a possible implementation of the first aspect, the updating, by the node, resource reservation states in Q1 of the K cycles based on the bandwidth value r1 and the quantity Q1 includes: updating, by the node, a bandwidth value corresponding to a resource reservation state in each of the Q1 cycles, where updated bandwidth values corresponding to different cycles are different or are not completely the same.

For example, the resource reservation state in each of the K cycles is the total bandwidth of the resources that have been reserved by the node in each cycle, and the updating, by the node, resource reservation states in Q1 of the K cycles based on the bandwidth value r1 and the quantity Q1 includes: increasing, by the node, a bandwidth value corresponding to a resource reservation state in each of the Q1 cycles, where increased bandwidth values corresponding to different cycles are different or are not completely the same.

For another example, the resource reservation state in each of the K cycles is the total bandwidth of the remaining available resources of the node in each cycle, and the updating, by the node, resource reservation states in Q1 of the K cycles based on the bandwidth value r1 and the quantity Q1 includes: decreasing, by the node, a bandwidth value corresponding to a resource reservation state in each of the Q1 cycles, where decreased bandwidth values corresponding to different cycles are different or are not completely the same.

With reference to the first aspect, in a possible implementation of the first aspect, the updating, by the node, resource reservation states in Q1 of the K cycles based on the bandwidth value r1 and the quantity Q1 includes: updating, by the node based on the bandwidth value r1 and the quantity Q1, resource reservation states in Q1 cycles starting from a first start cycle in the K cycles, where the first start cycle is a cycle within which a start moment at which the node makes a resource reservation based on the first message falls.

With reference to the first aspect, in a possible implementation of the first aspect, the first start cycle is a current cycle when the node receives the first message.

With reference to the first aspect, in a possible implementation of the first aspect, the first message further carries information about the first start cycle.

The information about the first start cycle represents information used to indicate the first start cycle, for example, a number or an identifier of the first start cycle.

Information about a cycle in this application is information that can uniquely identify the cycle.

With reference to the first aspect, in a possible implementation of the first aspect, the first message carries cookie (Cookie) information, and the cookie information includes: the bandwidth value r1, the quantity Q1, the first start cycle, and a sending interface of the node.

With reference to the first aspect, in a possible implementation of the first aspect, the method further includes: receiving, by the node, a second message, where the second message and the first message are associated with a same data flow, the second message carries information about a bandwidth value r2 of a resource requested to be reserved again and information about a quantity Q2 of cycles occupied by the resource, and Q2 is less than or equal to K; and updating, by the node based on the bandwidth value r2 and the quantity Q2, resource reservation states in Q2 cycles starting from a second start cycle in the K cycles, where the second start cycle is the (Q1)^{th} cycle after the first start cycle.

With reference to the first aspect, in a possible implementation of the first aspect, the updating, by the node, resource reservation states in Q1 of the K cycles based on the bandwidth value r1 and the quantity Q1 includes: determining, by the node based on the bandwidth value r1, the quantity Q1, and a resource reservation state of the node in the current cycle, whether the node supports a resource reservation; and when it is determined that the node supports a resource reservation, updating the resource reservation states in the Q1 of the K cycles.

With reference to the first aspect, in a possible implementation of the first aspect, the determining, by the node based on the bandwidth value r1, the quantity Q1, and a resource reservation state of the node in the current cycle, whether the node supports a resource reservation includes: when a bandwidth value of a remaining available resource of the node in the current cycle is greater than or equal to the bandwidth value r1, determining that the node supports a resource reservation; or when a bandwidth value of a remaining available resource of the node in the current cycle is less than the bandwidth value r1, determining that the node does not support a resource reservation.

With reference to the first aspect, in a possible implementation of the first aspect, the first message is a reservation Resv message, and the Resv message comes from an egress edge node of a transmission path of a data flow for which a resource reservation is requested. After receiving a path message from an ingress edge node, the egress edge node generates the Resv message, and then sends the Resv message in a reverse direction of a transmission direction of the path message, that is, the Resv message successively passes through all nodes on the transmission path.

With reference to the first aspect, in a possible implementation of the first aspect, the first message is a reservation Resv message, and before the node receives the Resv message, the method further includes: receiving, by the node, a path path message from an ingress edge node of the transmission path; and updating, by the node, the path message, where the updated path message further carries the information about the first start cycle. The first start cycle is the current cycle when the node receives the path message. The Resv message generated by the egress edge node after receiving the path message from the ingress edge node also carries the first start cycle.

Optionally, in this implementation, the duration of the cycle (cycle) is greater than or equal to the RTT of the transmission path of the data flow for which a resource reservation is requested. It should be understood that, because the duration of the cycle (cycle) is greater than or equal to the RTT of the transmission path of the data flow for which a resource reservation is requested, a moment at which the node receives the path message and a moment at which the node receives the Resv message can fall within a same cycle.

It should be understood that, because the duration of the cycle (cycle) is greater than or equal to the RTT of the transmission path of the data flow for which a resource reservation is requested, a moment at which the node receives the path message and a moment at which the node receives the Resv message can fall within a same cycle.

With reference to the first aspect, in a possible implementation of the first aspect, the first message is a reservation Resv message, and before the node receives the Resv message, the method further includes: receiving, by the node, a path path message from an ingress edge node of the transmission path; and updating, by the node, the path message, where the updated path message further carries the cookie information of the node, and the cookie information of the node includes: the bandwidth value r1, the quantity Q1, the first start cycle, and the sending interface of the node, where the first start cycle is the cycle within which the start moment at which the node makes a resource reservation falls. In this implementation, the Resv message generated by the egress edge node after receiving the path message from the ingress edge node also carries the cookie information of the node.

In the solution provided in this application, the node that makes a resource reservation maintains the resource reservation states in the K cycles, that is, the node maintains the resource reservation states at a granularity of cycles instead of data flows. Therefore, even if a large quantity of data flows for which resource reservations are required pass through the node, the node does not need to maintain a large quantity of resource reservation states, so that network scalability for the resource reservations can be improved.

According to a second aspect, a resource reservation method is provided, and the method includes: sending, by an ingress edge node of a forwarding path, a first path path message to a core node, where the first path message carries cookie information of the ingress edge node, and the cookie information of the ingress edge node includes: a bandwidth value r1 of a resource requested to be reserved, a quantity Q1 of cycles occupied by the resource requested to be reserved, a third start cycle of the resource requested to be reserved at the ingress edge node, and a sending interface of the ingress edge node; and receiving, by the ingress edge node, a reservation Resv message sent by the core node, where the Resv message carries cookie information of each core node on the forwarding path, cookie information of a core node includes: the bandwidth value r1 of the resource requested to be reserved, the quantity Q1 of cycles occupied by the resource requested to be reserved, a start cycle of the resource requested to be reserved at the core node, and a sending interface of the core node, and the core node maintains resource reservation states in K cycles, where K is a positive integer, and Q1 is less than or equal to K.

Duration of the cycle (cycle) in this application is greater than or equal to an RTT of a transmission path of a data flow for which a resource reservation is requested.

With reference to the second aspect, in a possible implementation of the second aspect, the method further includes: sending, by the ingress edge node, a second path message to the core node, where the second path message and the first path message are associated with a same data flow, the second path message carries cookie information re-generated by the ingress edge node, and the cookie information re-generated by the ingress edge node includes: a bandwidth value r2 of a resource requested to be reserved again, a quantity Q2 of cycles occupied by the resource requested to be reserved again, a start cycle of the resource requested to be reserved again at the ingress edge node, and a sending interface of the ingress edge node, where the start cycle of the resource requested to be reserved again at the ingress edge node is a cycle following the last cycle indicated in the Resv message, and Q2 is less than or equal to K.

According to a third aspect, a resource reservation method is provided, and the method includes: receiving, by an egress edge node of a forwarding path, a path path message sent by a core node, where the path message carries cookie information of each node on the forwarding path, the cookie information of the core node includes: a bandwidth value r1 of a resource requested to be reserved, a quantity Q1 of cycles occupied by the resource requested to be reserved, a start cycle of the resource requested to be reserved at the core node, and a sending interface of the core node, and the core node maintains resource reservation states in K cycles, where K is a positive integer, and Q1 is less than or equal to K; and the path message further carries cookie information of the ingress edge node, where the cookie information of the ingress edge node includes: the bandwidth value r1 of the resource requested to be reserved, the quantity Q1 of cycles occupied by the resource requested to be reserved, a start cycle of the resource requested to be reserved at the ingress edge node, and a sending interface of the ingress edge node; and sending, by the egress edge node, a reservation Resv message to the core node, where the Resv message carries the same cookie information as the path message.

According to a fourth aspect, a communications apparatus is provided, and the communications apparatus is configured to perform the method according to any one of the first aspect or the possible implementations of the first aspect. Specifically, the communications apparatus may include a module configured to perform the method according to any one of the first aspect or the possible implementations of the first aspect.

According to a fifth aspect, a communications apparatus is provided, and the communications apparatus is configured to perform the method according to any one of the second aspect or the possible implementations of the second aspect. Specifically, the communications apparatus may include a module configured to perform the method according to any one of the second aspect or the possible implementations of the second aspect.

According to a sixth aspect, a communications apparatus is provided, and the communications apparatus is configured to perform the method according to any one of the third aspect or the possible implementations of the third aspect. Specifically, the communications apparatus may include a module configured to perform the method in any one of the third aspect or the possible implementations of the third aspect.

According to a seventh aspect, a communications apparatus is provided, where the communications apparatus includes a memory and a processor, the memory is configured to store an instruction, and the processor is configured to execute the instruction stored in the memory. In addition, execution of the instruction stored in the memory enables the processor to perform the method according to any one of the possible implementations of any one of the first aspect, the second aspect, or the third aspect.

Specifically, the communications apparatus further includes a transceiver or a communications interface, configured to perform a signal receiving/sending action in the method according to any one of the possible implementations of any one of the first aspect, the second aspect, or the third aspect.

According to an eighth aspect, a computer readable storage medium is provided, and a computer program is stored on the computer readable storage medium. When the computer program is executed by a computer, the computer is enabled to implement the method according to any one of the first aspect or the possible implementations of the first aspect.

According to a ninth aspect, a computer program product including an instruction is provided. When the instruction is executed by a computer, the computer is enabled to implement the method according to any one of the possible implementations of any one of the first aspect, the second aspect, or the third aspect.

In conclusion, in this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

### BRIEF DESCRIPTION OF DRAWINGS

FIG. 1 is a schematic diagram of a resource reservation scenario;
FIG. 2 is a schematic diagram of a basic procedure of a resource reservation;
FIG. 3 is a schematic flowchart of a resource reservation method according to an embodiment of this application;
FIG. 4 is a schematic diagram of maintaining a resource reservation state by a node in the prior art;
FIG. 5 and FIG. 6 are schematic diagrams of a process of evolution from FIG. 4 to FIG. 7;
FIG. 7 is a schematic diagram of maintaining a resource reservation state by a node according to an embodiment of this application;
FIG. 8A and FIG. 8B are another schematic flowchart of a resource reservation method according to an embodiment of this application;
FIG. 9 is still another schematic flowchart of a resource reservation method according to an embodiment of this application;
FIG. 10 is a schematic diagram of a basic procedure of a resource reservation according to an embodiment of this application;
FIG. 11 is a schematic block diagram of a communications apparatus according to an embodiment of this application;
FIG. 12 is another schematic block diagram of a communications apparatus according to an embodiment of this application;
FIG. 13 is a schematic block diagram of another communications apparatus according to an embodiment of this application;
FIG. 14 is another schematic block diagram of another communications apparatus according to an embodiment of this application;
FIG. 15 is a schematic block diagram of still another communications apparatus according to an embodiment of this application; and
FIG. 16 is another schematic block diagram of still another communications apparatus according to an embodiment of this application.

### DESCRIPTION OF EMBODIMENTS

The following describes the technical solutions in this application with reference to the accompanying drawings.

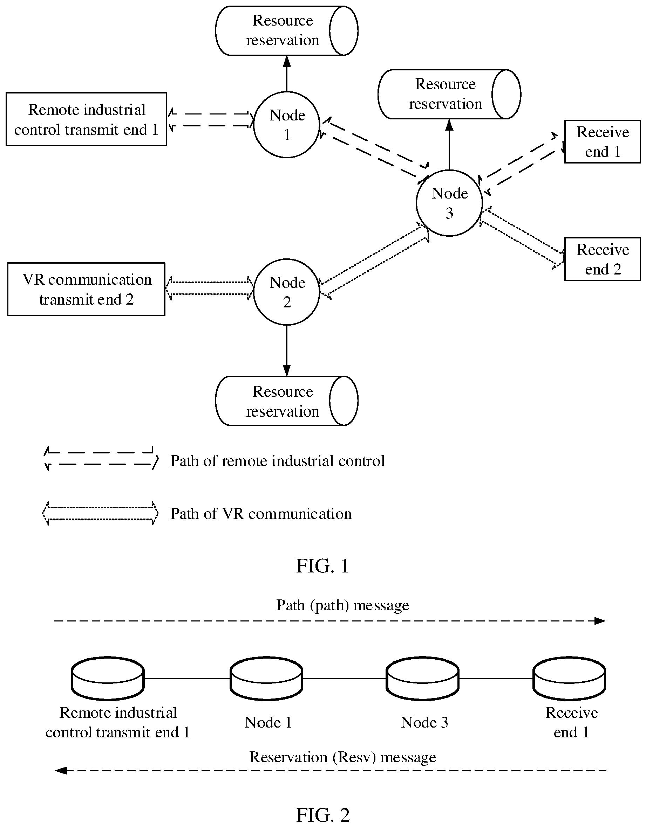

To facilitate understanding of the solutions provided in the embodiments of this application, the following first describes a scenario and a basic procedure of a resource reservation with reference to FIG. 1 and FIG. 2.

FIG. 1 is a schematic diagram of a resource reservation scenario. In FIG. 1, there are two applications: remote industrial control and VR communication, and resources need to be reserved for both the applications. A path of a data flow corresponding to the remote industrial control is: a remote industrial control transmit end 1 - a node 1 - a node 3 - a receive end 1. A path of a data flow corresponding to the VR communication is: a VR communication transmit end 2 - a node 2 - a node 3 - a receive end 2. The node 1 and the node 3 need to reserve a resource for the data flow corresponding to the remote industrial control. The node 2 and the node 3 need to reserve a resource for the data flow corresponding to the VR communication.

Using the path of the remote industrial control shown in FIG. 1 as an example, FIG. 2 is a schematic diagram of a basic procedure of a resource reservation. The basic procedure of the resource reservation is as follows: An ingress edge node (for example, the remote industrial control transmit end 1 shown in FIG. 2) of the path generates a path (Path) message by using the RSVP protocol, where the path message carries information such as a description of a to-be-transmitted data flow, and the path message is propagated hop by hop along the transmission path of the data flow. Each RSVP-capable node (for example, the node 1 and the node 3 shown in FIG. 2) on the path inserts a path state of the node into the path message based on the information carried in the path message, to update the path message, and delivers the updated path message to a next-hop node. The path message finally arrives at an egress edge node (for example, the receive end 1 shown in FIG. 2) of the path. The egress edge node extracts a transmission characteristic parameter from the received path message, and generates a reservation (Resv) message based on the parameter. The Resv message carries information (such as a bandwidth) about a resource requested to be reserved, and the Resv message is used for a hop-by-hop resource reservation in a reverse direction of transmission of the data flow. After receiving the Resv message, the nodes (for example, the node 3 and the node 1 shown in FIG. 2) on the path reserve resources based on the Resv message, and maintain such a state until the remote industrial control application releases these resources. This provides a guaranteed data flow service for the remote industrial control application.

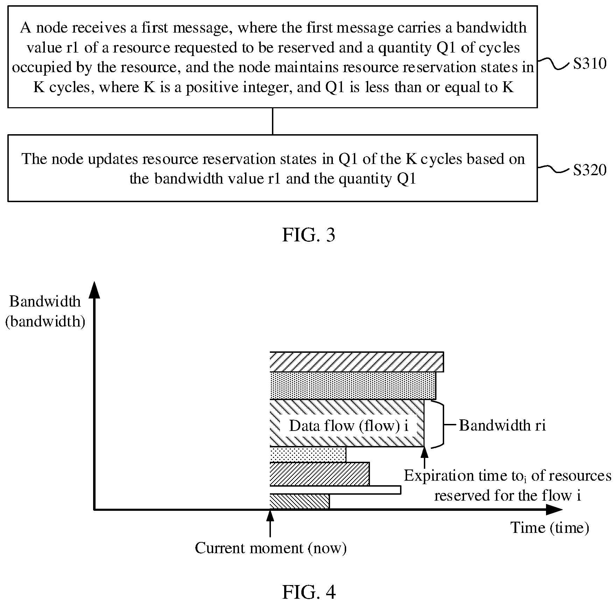

FIG. 3 is a schematic flowchart of a resource reservation method 300 according to an embodiment of this application. The method 300 includes S310 and S320.

S310. A node receives a first message, where the first message carries a bandwidth value r1 of a resource requested to be reserved and a quantity Q1 of cycles occupied by the resource, and the node maintains resource reservation states in K cycles (cycle), where K is a positive integer, and Q1 is less than or equal to K.

The node may be an intermediate node (which may also be referred to as a core node) other than edge nodes on a forwarding path of a data flow for which a resource reservation is requested.

The cycle represents a time unit for allocation of reserved resources. For example, the cycle may be a minimum time unit for allocation of reserved resources.

It should be understood that the cycle may also be referred to as a time slice or a time period.

That the node maintains resource reservation states in K cycles means that at any moment, the node maintains resource reservation states in K cycles starting from a cycle within which the current moment falls. In other words, the node always maintains resource reservation states in K cycles, and the first cycle in the K cycles is a cycle within which a current moment falls.

It can be learned that in this application, the node maintains the resource reservation states at a granularity of cycles, instead of at a granularity of data flows like in the prior art.

Optionally, the quantity K of cycles in which the node maintains the resource reservation states may be determined based on a performance status of the node. For example, if a storage capability or a data processing capability of the node can allow the node to maintain resource reservation states in 10 cycles at the same time, the quantity K of cycles in which the node maintains the resource reservation states may be set to 10.

Optionally, the quantity K of cycles in which the node maintains the resource reservation states may alternatively be determined based on a network status or another factor. This is not limited in this application.

The quantity K of cycles in which the node maintains the resource reservation states may be preset, or may be configured for the node in real time.

It can be learned that in this application, the quantity K of cycles in which the node maintains the resource reservation states is configurable, or in other words, is controllable.

Optionally, the node may locally maintain the resource reservation states in the K cycles.

Optionally, the node may maintain the resource reservation states in the K cycles on a server.

S320. The node updates resource reservation states in Q1 of the K cycles based on the bandwidth value r1 and the quantity Q1.

Optionally, the Q1 of the K cycles may be consecutive or inconsecutive.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered.

It should be understood that, the solution of this application can lower the performance requirement of the resource reservation for the node, and can further improve network scalability.

Optionally, a resource reservation state in each of the K cycles is determined based on a total bandwidth of resources that have been reserved by the node in each cycle.

A cycle x in the K cycles is used as an example. A resource reservation state maintained by the node in the cycle x is determined based on a total bandwidth of resources that have been reserved by the node in the cycle x.

Optionally, in an implementation, the resource reservation state maintained by the node in the cycle x is a total bandwidth value of the resources that have been reserved by the node in the cycle x.

Optionally, in another implementation, the resource reservation state maintained by the node in the cycle x is a total bandwidth value of remaining available resources of the node in the cycle x. In other words, the resource reservation state maintained by the node in the cycle x is the total bandwidth value of the remaining available resources obtained after a total bandwidth value of resources that have been reserved by the node in the cycle x is subtracted from a total bandwidth value of available resources of the node in the cycle x.

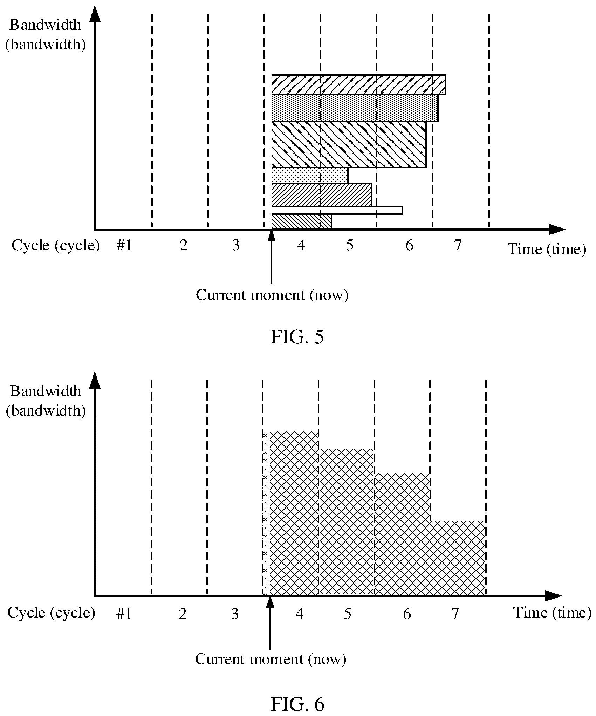

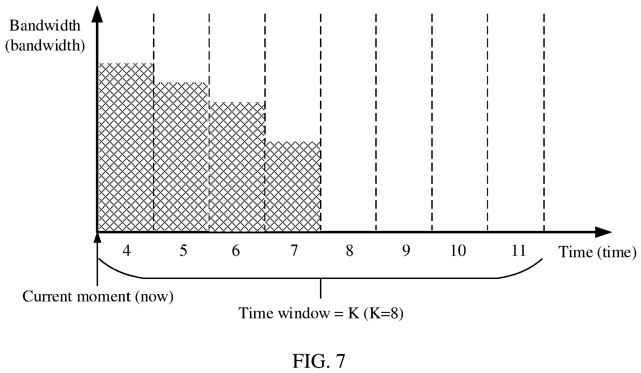

For better understanding of a manner of maintaining the resource reservation states by the node provided in this embodiment of this application, detailed descriptions are provided with reference to FIG. 4 to FIG. 7. FIG. 4 shows a manner of maintaining a resource reservation state by a node in the prior art. FIG. 7 shows a manner of maintaining a resource reservation state by a node according to an embodiment of this application. FIG. 5 and FIG. 6 show a process of evolution from FIG. 4 to FIG. 7. For ease of drawing and description, in FIG. 4 to FIG. 7, that a node reserves resources for seven data flows (for example, seven data flows shown in FIG. 4) is used as an example. It should be understood that FIG. 4 to FIG. 7 are merely an example instead of a limitation. In actual application, a node may process hundreds or thousands of data flows.

In FIG. 4 to FIG. 7, a horizontal coordinate axis represents time (time), and a vertical coordinate axis represents bandwidth (bandwidth). A current moment (now) shown in FIG. 4 to FIG. 7 is a current moment of a node.

As shown in FIG. 4, in the prior art, a node maintains a resource reservation state for each data flow. In an example of a data flow (flow) i shown in FIG. 7, a resource reservation state maintained by the node for the data flow i includes a bandwidth ri of a resource reserved for the data flow i and an expiration time toᵢ of the resource reserved for the data flow i.

As shown in FIG. 5, resource reservation states shown in FIG. 4 are discretized in a time dimension, and a range occupied by the resource reservation states shown in FIG. 4 in the time dimension is divided into seven cycles (cycle). "1", "2", ..., and "7" shown in FIG. 5 represent numbers of the cycles. In the following, a cycle numbered #x is denoted as a cycle #x for short. For example, a cycle numbered 5 is denoted as a cycle 5.

As shown in FIG. 6, bandwidths in cycles 4, 5, 6, and 7 after the current moment shown in FIG. 5 are summed up, so that resource reservation states in the cycles 4, 5, 6, and 7 are presented in a form of bars. In FIG. 6, a resource reservation state in the cycle 4 is a total bandwidth of resources that have been reserved by the node in the cycle 4, a resource reservation state in the cycle 5 is a total bandwidth of resources that have been reserved by the node in the cycle 5, a resource reservation state in the cycle 6 is a total bandwidth of resources that have been reserved by the node in the cycle 6, and a resource reservation state in the cycle 7 is a total bandwidth of resources that have been reserved by the node in the cycle 7.

As shown in FIG. 7, a part before the current moment in FIG. 6 is removed, and resource reservation states in K (K = 8) cycles starting from the cycle 4 are maintained. Bandwidth states in the K (K = 8) cycles shown in FIG. 7 is an example of the resource reservation states in the K cycles maintained by the node provided in this embodiment of this application.

The process of evolution from FIG. 5 to FIG. 6 may be referred to as a process of resource aggregation in the cycles. Based on this, a manner of maintaining the resource reservation states by the node in this application may also be referred to an aggregated flow resource reservation state.

Optionally, a time window including the K cycles in this application may also be referred to as an aggregated bandwidth reservation window (aggregated bandwidth reservation window, ABRW).

It can be learned from the example in FIG. 7 that, in this application, the node maintains the resource reservation states at a granularity of cycles instead of at a granularity of data flows. In other words, the resource reservation states are not maintained for data flows one by one.

FIG. 4 to FIG. 7 are merely an example used to explain that the node maintains the resource reservation states in the K cycles in this embodiment of this application, and this application is not limited thereto. For example, in actual application, a node may reserve resources for dozens or hundreds or thousands of data flows, instead of seven data flows.

It should be understood that, in the example in FIG. 7, a total bandwidth of available resources of the node in each of the K cycles is known. Therefore, optionally, a total bandwidth value of resources that have been reserved in a cycle may be subtracted from a bandwidth value of available resources in the cycle, to obtain a total bandwidth value of remaining available resources in the cycle, and the total bandwidth value of the remaining available resources in the cycle is used as a resource reservation state in the cycle.

Optionally, in this application, the Q1 of the K cycles for a resource reservation may be consecutive or inconsecutive. For example, in the scenario shown in FIG. 7, the cycles 4, 5, and 6 may be selected for the resource reservation, that is, the Q1 cycles for the resource reservation are consecutive. For another example, in the scenario shown in FIG. 7, the cycles 4, 6, and 7 may be selected for the resource reservation, that is, the Q1 cycles for the resource reservation are inconsecutive.

The foregoing example in FIG. 4 to FIG. 7 explains a meaning of maintaining, by the node, the resource reservation states in the K cycles in this embodiment of this application.

Optionally, duration of the cycle (cycle) in this application is greater than or equal to a round-trip time (Round-Trip Time, RTT) of a transmission path of a data flow for which a resource reservation is requested.

It should be understood that, because the duration of the cycle (cycle) is greater than or equal to the RTT of the transmission path of the data flow for which a resource reservation is requested, a moment at which the node receives the path message and a moment at which the node receives the Resv message can fall within a same cycle.

Optionally, in some embodiments, the resource reservation state in each of the K cycles is the total bandwidth of the resources that have been reserved by the node in each cycle. In S320, the node adds, based on the bandwidth value r1 and the quantity Q1, the bandwidth value r1 to a bandwidth value corresponding to a resource reservation state in each of the Q1 cycles.

Specifically, assuming that the resource reservation states locally maintained in the K cycles when the node receives the first message are shown in FIG. 7, the start cycle is the cycle 4 in FIG. 7. Assuming that Q1 is 3, the node reserves, based on the bandwidth value r1 and the quantity Q1, resources whose bandwidth values are r1 and that occupy the cycle 4 to the cycle 6 in time domain. An operation of updating, by the node, the locally maintained resource reservation states is to add the bandwidth value r1 to a bandwidth value corresponding to a resource reservation state in each of the cycle 4, the cycle 5, and the cycle 6.

Optionally, in some embodiments, the resource reservation state in each of the K cycles is a total bandwidth of remaining available resources of the node in each cycle. In S320, the node subtracts, based on the bandwidth value r1 and the quantity Q1, the bandwidth value r1 from a bandwidth value corresponding to a resource reservation state in each of the Q1 cycles.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

Optionally, that the node updates resource reservation states in Q1 of the K cycles based on the bandwidth value r1 and the quantity Q1 includes: updating, by the node, a bandwidth value corresponding to a resource reservation state in each of the Q1 cycles, where updated bandwidth values corresponding to different cycles are different or are not completely the same.

For example, the resource reservation state in each of the K cycles is the total bandwidth of the resources that have been reserved by the node in each cycle, and that the node updates resource reservation states in Q1 of the K cycles based on the bandwidth value r1 and the quantity Q1 includes: increasing, by the node, a bandwidth value corresponding to a resource reservation state in each of the Q1 cycles, where increased bandwidth values corresponding to different cycles are different or are not completely the same.

For another example, the resource reservation state in each of the K cycles is the total bandwidth of the remaining available resources of the node in each cycle, and that the node updates resource reservation states in Q1 of the K cycles based on the bandwidth value r1 and the quantity Q1 includes: decreasing, by the node, a bandwidth value corresponding to a resource reservation state in each of the Q1 cycles, where decreased bandwidth values corresponding to different cycles are different or are not completely the same.

Optionally, in S320, the node updates, based on the bandwidth value r1 and the quantity Q1, resource reservation states in Q1 cycles starting from a first start cycle in the K cycles, where the first start cycle is a cycle within which a start moment at which the node makes a resource reservation based on the first message falls.

When the first message is used to request a first-time resource reservation for a data flow, the first start cycle is a current cycle when the node receives the first message. For example, if the resource reservation states locally maintained when the node receives the first message are shown in FIG. 7, the first start cycle is the cycle 4 shown in FIG. 7.

When the first message is used to request a non-first-time resource reservation for a data flow, the first start cycle is a cycle following the last cycle occupied by a previous resource reservation requested for a data flow, and is not necessarily a current cycle when the node receives the first message.

For example, in FIG. 7, it is assumed that a resource reserved for the first time by the node for the data flow i based on the first message occupies the cycle 4, the cycle 5, and the cycle 6. It is assumed that a current cycle when the node receives a second message used to request another resource reservation for the data flow i is the cycle 5. However, a start cycle (that is, a second start cycle) in which a resource reservation is made based on the second message is the cycle 7 shown in FIG. 7, instead of the cycle 5.

Optionally, in S310, the first message received by the node further carries information about the first start cycle.

The information about the first start cycle represents information used to indicate the first start cycle, for example, a number or an identifier of the first start cycle.

Information about a cycle in this application is information that can uniquely identify the cycle.

Optionally, in S310, the first message carries cookie (Cookie) information, and the cookie information includes: the bandwidth value r1, the quantity Q1, the first start cycle, and a sending interface of the node.

For example, a format of the cookie information is: [<Cookie>] ::= <type> <start cycle> <cycle num> <bandwidth> <interface>.

Optionally, in some embodiments, the first message carries the information about the first start cycle, and the method 300 further includes: receiving, by the node, a second message, where the second message and the first message are associated with a same data flow, the second message carries information about a bandwidth value r2 of a resource requested to be reserved again and information about a quantity Q2 of cycles occupied by the resource, and Q2 is less than or equal to K; and updating, by the node based on the bandwidth value r2 and the quantity Q2, resource reservation states in Q2 cycles starting from a second start cycle in the K cycles, where the second start cycle is a cycle following the last cycle of a previous resource reservation of the node.

Optionally, if the Q1 cycles of the resource reservation made based on the first message are consecutive, the second start cycle is the (Q1)^{th} cycle after the first start cycle.

Specifically, for example, in FIG. 7, it is assumed that the resource reserved for the first time by the node for the data flow i based on the first message occupies the cycle 4, the cycle 5, and the cycle 6, that is, Q1 = 3. After receiving the second message used to request another resource reservation for the data flow i, the node makes a resource reservation based on information about a resource requested to be reserved again, and a start cycle (that is, the second start cycle) for the resource reservation is the cycle 7 shown in FIG. 7.

Optionally, in S320, that the node updates resource reservation states in Q1 of the K cycles based on the bandwidth value r1 and the quantity Q1 includes: determining, by the node based on the bandwidth value r1, the quantity Q1, and a resource reservation state of the node in the current cycle, whether the node supports a resource reservation; and when it is determined that the node supports a resource reservation, updating the resource reservation states in the Q1 of the K cycles.

Optionally, one manner of determining whether the node supports a resource reservation corresponding to the bandwidth value r1 and the quantity Q1 is: when a bandwidth value of a remaining available resource of the node in the current cycle is greater than or equal to the bandwidth value r1, determining that the node supports a resource reservation; or when a bandwidth value of a remaining available resource of the node in the current cycle is less than the bandwidth value r1, determining that the node does not support a resource reservation.

Optionally, another manner of determining whether the node supports a resource reservation corresponding to the bandwidth value r1 and the quantity Q1 is: only when all bandwidth values of remaining available resources in the Q cycles are greater than or equal to the bandwidth value r1, determining that the node supports a resource reservation; otherwise, determining that the node does not support a resource reservation.

The resource in this application may be a bandwidth resource, or may be another type of resource. For example, the resource in this application may alternatively be a burst traffic byte quantity resource. It should be understood that, in an actual operation, a burst traffic byte quantity may also be converted into a bandwidth. For another example, the resource in this application may alternatively be a memory resource. For another example, the resource in this application represents a resource in a time dimension.

The first message in this embodiment of this application may be a reservation (Resv) message or a path (Path) message in the RSVP, or may be signaling delivered by the controller in a centralized manner. This is not limited in this application.

Optionally, in S310, the first message received by the node is a Resv message, and the Resv message comes from an egress edge node of a transmission path of a data flow for which a resource reservation is requested. In this case, the method 300 further includes: forwarding, by the node, the Resv message to a next node, where the next node is a next node in a reverse direction of the transmission path of the data flow for which a resource reservation is requested. Optionally, the first message received by the node in S310 may further carry the following information: a traffic specification parameter TSpec, a parameter describing a desired quality of service (quality of service, QoS) class, and a filter descriptor parameter (FilterSpec).

Optionally, in S310, the first message received by the node is a path message, and the path message comes from an ingress edge node of a transmission path of a data flow for which a resource reservation is requested. In this case, the method 300 further includes: forwarding, by the node, the path message to a next node, where the next node is a next node in a forward direction of the transmission path of the data flow for which a resource reservation is requested.

Optionally, in S310, the first message received by the node is centralized control signaling, and the centralized control signaling comes from a control node in a network system.

For ease of understanding and description, that the first message is a Resv message is used as an example for description in the following embodiment.

Optionally, in some embodiments, duration of the cycle (cycle) is greater than or equal to an RTT of a transmission path of a data flow for which a resource reservation is requested.

It should be understood that, because the duration of the cycle (cycle) is greater than or equal to the RTT of the transmission path of the data flow for which a resource reservation is requested, a moment at which the node receives the path message and a moment at which the node receives the Resv message can fall within a same cycle.

In this embodiment, the first message received in S310 is a Resv message, and before the node receives the Resv message in S310, the method 300 further includes: receiving, by the node, a path (Path) message; determining, by the node, the first start cycle based on the path message, and updating the path message, where the updated path message further carries information about the first start cycle; and sending, by the node, the updated path message. The Resv message generated after the egress edge node receives the path message from the ingress edge node also carries the first start cycle. In other words, the Resv message received by the node in S310 carries the first start cycle.

In a scenario in which a first-time resource reservation is requested for a data flow, the determining, by the node, the first start cycle based on the path message means that the node uses a cycle within which a current moment at which the node receives the path message falls as the first start cycle.

Specifically, the path message may carry the first start cycle in a plurality of manners.

Optionally, in some embodiments, the path message received by the node carries the bandwidth value r1 of the resource requested to be reserved and the quantity Q1 of cycles occupied by the resource. In S320, the node determines the first start cycle based on the path message, and generates cookie information, where the cookie information includes: the bandwidth value r1, the quantity Q1, the first start cycle, and the sending interface of the node; and the node updates the path message, where the updated path message carries the cookie information. The Resv message received in S310 also carries the cookie information.

Optionally, a format of the cookie information in this specification is: [<Cookie>] ::= <type> <start cycle> <cycle num> <bandwidth> <interface>, where <type> represents a protocol type of a tunnel; <start cycle> represents a start cycle; <cycle num> represents a quantity of cycles (cycle) occupied by the reserved resource; <bandwidth> represents a bandwidth of the reserved resource; and <interface> represents the sending interface of the node.

The sending interface of the node is an interface of the node used to forward the path message.

Optionally, the first start cycle determined by the node may alternatively be carried in the path message in another manner. For example, the first start cycle is carried by using another field in the path message.

Specifically, the path message received by the node may further include the following information: a traffic range parameter TSpec and a session object that are configured for a to-be-sent data flow, where the session object includes a destination address of a tunnel (Tunnel), namely, an IP address of the egress edge node of the transmission path of the data flow, and further includes an identifier of the tunnel, namely, a Tunnel ID.

It should be understood that the path message received by the node comes from the ingress edge node of the transmission path of the data flow for which a resource reservation is requested.

It should be understood that, after a resource is reserved for a same data flow i, another resource reservation may be requested for the data flow i. Usually, to distinguish between a first-time resource reservation and a non-first-time resource reservation, a path message and a Resv message in a process of the first-time resource reservation for the data flow i are denoted as an ipath message and an iResv message, respectively; and a path message and a Resv message in a process of the non-first-time resource reservation for the data flow i are denoted as an rpath message and an rResv message, respectively.

Optionally, in some embodiments, before S310, the method 300 includes: receiving, by the node, an ipath message sent by an upstream node, where the ipath message comes from the ingress edge node, and the upstream node herein may be the ingress edge node or an intermediate node (that is, a core node); determining, by the node, a first start cycle based on the ipath message, where the first start cycle is a current cycle when the node receives the ipath message; updating, by the node, the ipath message, so that the updated ipath message carries information about the first start cycle; and sending, by the node, the updated ipath message to a downstream node. The iResv message generated by the egress edge node after receiving the ipath message from the ingress edge node also carries the first start cycle. In S310, the node receives the iResv message from the egress edge node. In other words, the iResv message also carries the information about the first start cycle. The method 300 further includes: receiving, by the node, an rResv message from the edge node, where the rResv message and the iResv message are associated with a same data flow, the rResv message carries information about a bandwidth value r2 of a resource requested to be reserved again and information about a quantity Q2 of cycles occupied by the resource, and Q2 is less than or equal to K; and updating, by the node based on the bandwidth value r2 and the quantity Q2, resource reservation states in Q2 cycles starting from a second start cycle in the K cycles, where the second start cycle is a cycle following the last cycle of a previous resource reservation of the node.

Optionally, if the Q1 cycles of the resource reservation made based on the first message are consecutive, the second start cycle is the (Q1)^{th} cycle after the first start cycle.

In this embodiment, the duration of the cycle is greater than or equal to the RTT of the transmission path of the data flow for which a resource reservation is requested.

Specifically, for example, in FIG. 7, it is assumed that the resource reserved for the first time by the node for the data flow i occupies the cycle 4, the cycle 5, and the cycle 6, that is, Q1 = 3. After receiving the rResv message of the data flow i, the node makes a resource reservation based on information about a resource requested to be reserved again, and a start cycle (that is, the second start cycle) for the resource reservation is the cycle 7 shown in FIG. 7.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

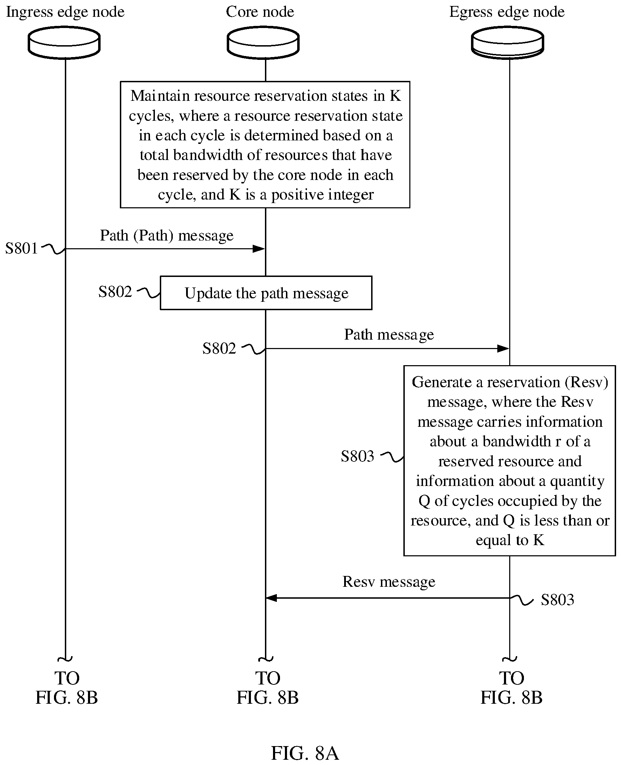

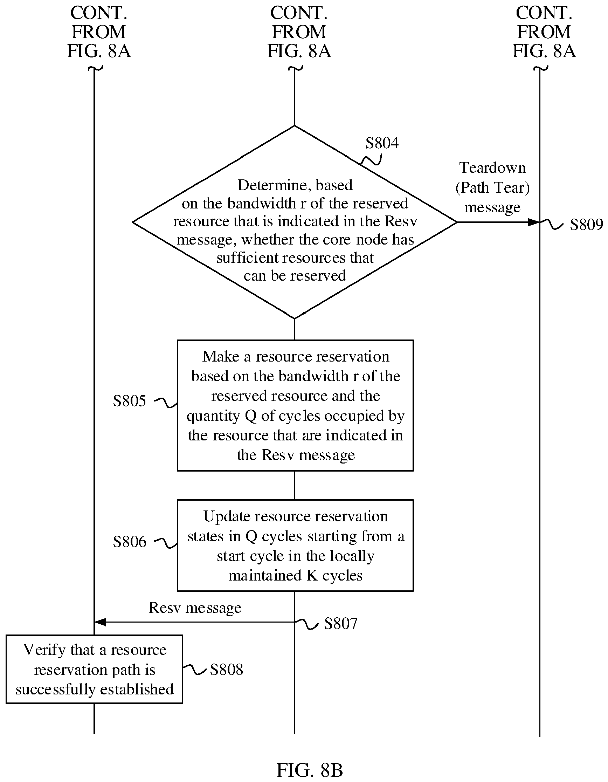

FIG. 8A and FIG. 8B are another schematic flowchart of a resource reservation method 800 according to an embodiment of this application. The method 800 is performed by an ingress edge node, a core node, and an egress edge node on a transmission path of a data flow, where the core node represents an intermediate node located between the ingress edge node and the egress edge node on the transmission path, and the core node corresponds to the node in the method 300 provided in the foregoing method embodiment. The transmission path may include one or more core nodes. A processing manner of each core node is similar. For brevity, one core node is used as an example for description in this embodiment. The method 800 includes steps S801 to S810.

S801. The ingress edge node sends a path message.

Specifically, the path message may include the following information: a traffic range parameter TSpec and a session object that are configured for a to-be-sent data flow, where the session object includes a destination address of a tunnel (Tunnel), namely, an IP address of the egress edge node of the transmission path of the data flow, further includes an identifier of the tunnel, that is, a Tunnel ID.

Optionally, the path message further carries cookie information of the ingress edge node, where the cookie information includes the following information:
a protocol type (type) of the tunnel, a bandwidth value r of a resource requested to be reserved, a quantity Q of cycles occupied by the resource requested to be reserved, a first start cycle, and a sending interface of the ingress edge node.

If the path message is an ipath message, the first start cycle indicates that a resource has not yet been allocated. If the path message is an rpath message, the first start cycle is a cycle following the last cycle occupied by a previously reserved resource.

The ingress edge node maintains a resource reservation state in a per-flow manner. In other words, the ingress edge node maintains a resource reservation state of each flow.

Duration of the cycle (cycle) in this embodiment is greater than an RTT from the ingress edge node to the egress edge node.

S802. The core node receives the path message, inserts a sending interface of the core node into the path message to update the path message, and sends the updated path message to a downstream node (which is the egress edge node in this example).

The core node maintains resource reservation states in K cycles, and a resource reservation state in each cycle is determined based on a total bandwidth of resources that have been reserved by the core node in each cycle, and K is a positive integer. A specific example is shown in FIG. 7.

Optionally, the node may locally maintain the resource reservation states in the K cycles.

Optionally, the node may maintain the resource reservation states in the K cycles on a server.

Optionally, the core node uses a cycle within which a moment at which the core node receives the path message falls as a start cycle (denoted as a second start cycle) for a resource reservation, and inserts the second start cycle into the path message, to update the path message, where the updated path message carries information about the second start cycle.

Optionally, the path message received by the core node carries the cookie information of the ingress edge node, where the cookie information of the ingress edge node includes the following information: the protocol type (type) of the tunnel, the bandwidth value r of the resource requested to be reserved, the quantity Q of cycles occupied by the resource requested to be reserved, the first start cycle, and the sending interface of the ingress edge node. After receiving the path message, the core node generates cookie information of the core node, and updates the path message by inserting the cookie information of the core node into the path message, where the cookie information of the core node includes the following information: the protocol type (type) of the tunnel, the bandwidth value r of the resource requested to be reserved, the quantity Q of cycles occupied by the resource requested to be reserved, the second start cycle, and the sending interface of the core node.

S803. The egress edge node receives the path message sent by the core node; generates a Resv message, where the Resv message carries the bandwidth value r of the resource requested to be reserved and a quantity Q of cycles occupied by the resource; and sends the Resv message to the ingress edge node in a reverse direction of a transmission direction of the path message, for example, sends the Resv message to the core node shown in FIG. 8A and FIG. 8B.

Optionally, the path message sent by the core node carries the information about the first start cycle and the information about the second start cycle, and the Resv message generated by the egress edge node also carries the information about the first start cycle and the information about the second start cycle.

Optionally, the path message sent by the core node carries the cookie information of the ingress edge node and the cookie information of the core node, and the Resv message generated by the egress edge node also carries the cookie information of the ingress edge node and the cookie information of the core node.

S804. The core node receives the Resv message sent by the egress edge node, and determines, based on the bandwidth value r of the reserved resource that is indicated in the Resv message, whether the core node has sufficient resources that can be reserved. If yes, go to S805; otherwise, go to S809. When a total bandwidth value of available resources of the core node in the second start cycle is greater than or equal to the bandwidth value r, it is determined that the core node can make a resource reservation; otherwise, the core node cannot make a resource reservation.

S805. The core node makes a resource reservation based on the bandwidth r of the reserved resource and the quantity Q of occupied cycles that are indicated in the Resv message.

Specifically, the core node reserves a resource whose bandwidth value is r and occupies Q cycles starting from the second start cycle in time domain.

S806. The core node updates, based on a resource actually reserved in the S805, locally maintained resource reservation states in Q cycles starting from the second start cycle in the K cycles.

When a resource reservation state maintained by the core node in each of the K cycles is a total bandwidth of resources that have been reserved by the core node in each cycle, in S806, an operation of updating the locally maintained resource reservation states is: adding, by the core node, the bandwidth value r to a bandwidth value corresponding to a resource reservation state in each of the Q cycles starting form the second start cycle.

When a resource reservation state maintained by the core node in each of the K cycles is a total bandwidth of remaining available resources of the core node in each cycle, in S806, an operation of updating the locally maintained resource reservation states is: subtracting, by the core node, the bandwidth value r from a bandwidth value corresponding to a resource reservation state in each of the Q cycles starting form the second start cycle.

S807. The core node forwards the Resv message to the ingress edge node.

S808. The ingress edge node receives the Resv message forwarded by the core node, and verifies that a resource reservation path is successfully established. Until now, a resource reservation process is completed.

It should be understood that a process of verifying, by the ingress edge node based on the Resv message, whether the resource reservation path is successfully established pertains to the prior art, and details are not described in this specification.

S809. When determining, in S804, that the node cannot reserve the resource whose bandwidth value is r, the core node returns a path tear (Path Tear) message to the sending node (which is the egress edge node in this example) of the Resv message.

It should be understood that, after a resource is reserved for a same data flow i, another resource reservation may be requested for the data flow i. Usually, to distinguish between a first-time resource reservation and a non-first-time resource reservation, a path message and a Resv message in a process of the first-time resource reservation for the data flow i are denoted as an ipath message and an iResv message, respectively; and a path message and a Resv message in a process of the non-first-time resource reservation for the data flow i are denoted as an rpath message and an rResv message, respectively.

Optionally, in one case, the path message in S801 to S809 is an ipath message, and the Resv message in S801 to S809 is an iResv message. In S801, a number of the first start cycle carried in the ipath message sent by the ingress edge node is -1, indicating that a resource has not yet been allocated. It should be understood that the number of the first start cycle may alternatively be specified in another form, provided that the first start cycle can indicate that a resource has not yet been reserved. In S802, the second start cycle carried in the ipath message sent by the core node is a current cycle when the core node receives the ipath message.

Optionally, in another case, the path message in S801 to S809 is an rpath message, and the Resv message in S801 to S809 is an rResv message. In other words, a resource is reserved for the same data flow consecutively. For example, the ingress edge node requests, for the data flow i by using the rpath message, core nodes along the path to make another reservation of a resource whose bandwidth is the same as previously reserved. The first start cycle carried in the rpath message sent by the ingress edge node in S801 is a cycle following the last cycle occupied by a previously reserved resource. In S802, the second start cycle carried in the ipath message sent by the core node is a cycle following the last cycle occupied by a resource that is previously reserved by the core.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

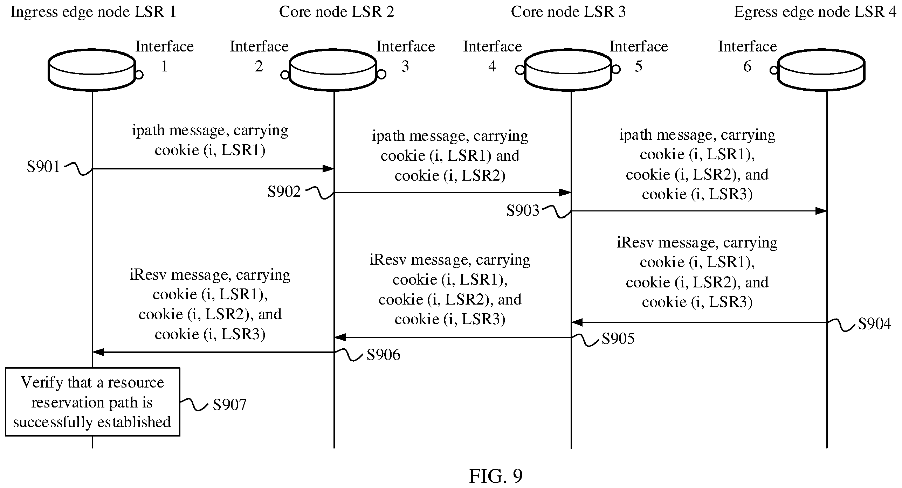

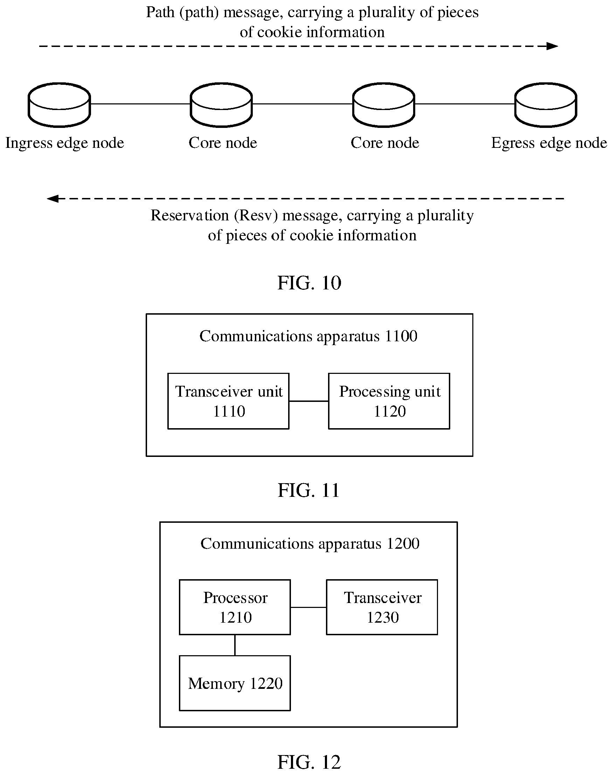

To better understand the embodiments of this application, the following describes the resource reservation method provided in the embodiments of this application with reference to specific examples shown in FIG. 9 and FIG. 10.

FIG. 9 is another schematic flowchart of a resource reservation method according to an embodiment of this application. In FIG. 9, for example, a first-time resource reservation is requested for a data flow i. On a forwarding path of the data flow i, there are four label switching routers (Label Switching Router, LSR): an LSR 1, an LSR 2, an LSR 3, and an LSR 4. The LSR 1 is an ingress edge node (Ingress Edge Node), the LSR 2 and the LSR 3 are intermediate transmission nodes (Transit Node) (which are also referred to as core nodes), and the LSR 4 is an egress edge node (Egress Edge Node). Both the LSR 2 and the LSR 3 maintain resource reservation states in K cycles in a manner shown in FIG. 7, where duration of the cycle is greater than or equal to an RTT of a transmission path of a data flow for which a resource reservation is requested.

Optionally, the LSR 2 and the LSR 3 may locally maintain the resource reservation states in the K cycles.

Optionally, the LSR 2 and the LSR 3 may maintain the resource reservation states in the K cycles on a server.

It is assumed that a bandwidth of a reserved resource that needs to be requested for the data flow i is 10 M, and the reserved resource occupies 100 cycles in time domain. The method includes the following steps.

S901. The LSR 1 sends an ipath message to the LSR 2.

The ipath message includes a session object and cookie information of the LSR 1 (denoted as cookie (i, LSR1)).

The session object includes a destination address of a tunnel (Tunnel), namely, an IP address of the LSR 4, and an identifier of the tunnel, which may be denoted as a Tunnel ID.

The cookie (i, LSR1) includes: a protocol type (type) of the tunnel, a start cycle (start cycle), a quantity Qi of cycles occupied by the reserved resource, a bandwidth (bandwidth) of the reserved resource, and a sending interface (interface) of the LSR 1.

The protocol type (type) of the tunnel is, for example, IPv4, which is denoted as LSP_Tunnel_IPv4.

A value of a number of the start cycle indicates that a resource has not yet been allocated for the data flow i. It may be specified that a value of the start cycle is a preset value, and the preset value indicates that a resource has not yet been allocated for the data flow i. For example, it is specified that the number of the start cycle is equal to -1, indicating that a resource has not yet been allocated. Alternatively, it is specified that the start cycle = -2, indicating that a resource has not yet been allocated for the data flow i. Alternatively, it is specified that the start cycle = a preset value, indicating that a resource has not yet been allocated for the data flow i. This is not limited in this embodiment of this application.

The quantity Qi of cycles occupied by the reserved resource is less than or equal to a half of a total quantity K of cycles locally maintained by the core node (the LSR 2 or the LSR 3). In this example, Qi = 100.

The bandwidth (bandwidth) of the reserved resource is a width of a frequency band occupied by the reserved resource in frequency domain. In this example, the bandwidth of the reserved resource = 10 M.

The sending interface (interface) of the LSR 1 is an interface of the LSR 1 in a forwarding direction of the data flow i. In this example, the interface of the LSR 1 = 1.

It should be understood that, the LSR 1 may search for a route by using information in an explicit route object (Explicit Route Object, ERO), to learn that a next hop is the LSR 2.

In an example, a format of the ipath message is:

```
           <iPath Message> ::= <Common Header> [<INTEGRITY>] <SESSION>
 <RSVP_HOP><TIME_VALUES>[<POLICY_DATA> ... ][<sender descriptor>] <sender descriptor> ::=
 <SENDER_TEMPLATE> <SENDER_TSPEC>[<ADSPEC>][<Cookie> ] ::= <type> <start cycle> <cycle num>
 <bandwidth> <interface>.
```

<Cookie> represents the cookie information carried in the ipath message. <type> represents the protocol type. <start cycle> represents the start cycle of the reserved resource. <cycle num> indicates the quantity of cycles (cycle) occupied by the reserved resource. <bandwidth> represents the bandwidth of the reserved resource. <interface> represents the sending interface of the sending node of the ipath message. In this example, <interface> represents the sending interface of the LSR 1 (for example, an interface 1 shown in FIG. 9).

S902. The LSR 2 parses the received ipath message, adds cookie information of the LSR 2 to the ipath message, to update the ipath message, and sends the updated ipath message to a downstream node, namely, the LSR 3.

Specifically, after receiving the ipath message sent by the LSR 1, the LSR 2 parses the ipath message to learn that the destination address of the tunnel in the session object in the ipath message is not the current node, namely, an IP address of the LSR 2, indicating that the LSR 2 is an intermediate node (core node) on the forwarding path. As an intermediate node, the LSR 2 updates the ipath message by adding the cookie information of the LSR 2 to the ipath message.

A format of the cookie information of the LSR 2 is the same as the format of the cookie information of the LSR 1, that is, [<Cookie> ] ::= <type> <start cycle> <cycle num> <bandwidth> <interface>.

Compared with the cookie information of the LSR 1, in the cookie information of the LSR 2, the protocol type (type), the quantity of cycles (cycle num) occupied by the reserved resource, and the bandwidth (bandwidth) of the reserved resource remain unchanged, but the start cycle (start cycle) of the reserved resource and the sending interface (interface) need to be updated.

Assuming that a number of a current cycle when the LSR 2 receives the ipath message is 18, the start cycle in the cookie information of the LSR 2 is 18. In the scenario shown in FIG. 9, a sending interface of the LSR 2 is 3. In this example, the cookie information of the LSR 2 is as follows:
cookie (i, LSR2) (type = LSP_TUNNEL_IPV4, start cycle = 18, cycle num = 100, bandwidth = 10 M, interface = 3).

After adding the cookie information of the LSR 2 to the ipath message, the LSR 2 continues to forward the updated ipath message to a downstream node along the forwarding path. In this example, the LSR 2 sends the updated ipath message to the LSR 3.

S903. The LSR 3 parses the received ipath message, adds cookie information of the LSR 3 to the ipath message, to update the ipath message, and sends the updated ipath message to a downstream node, namely, the LSR 4.

Specifically, after receiving the ipath message sent by the LSR 2, the LSR 3 parses the ipath message to learn that the destination address of the tunnel in the session object in the ipath message is not the current node, namely, an IP address of the LSR 3, indicating that the LSR 3 is an intermediate node (core node) on the forwarding path. As an intermediate node, the LSR 3 updates the ipath message by adding the cookie information of the LSR 3 to the ipath message.

The format of the cookie information of the LSR 2 is [ <Cookie> ] ::= <type> <start cycle> <cycle num> <bandwidth> <interface>.

Compared with the cookie information of the LSR 1 and the cookie information of the LSR 2, in the cookie information of the LSR 3, the protocol type (type), the quantity of cycles (cycle num) occupied by the reserved resource, and the bandwidth (bandwidth) of the reserved resource remain unchanged, and the start cycle (start cycle) and the sending interface (interface) of the reserved resource need to be updated.

Assuming that a number of a current cycle when the LSR 3 receives the ipath message is 40, the start cycle in the cookie information of the LSR 3 is 40. In the scenario shown in FIG. 7, the sending interface of the LSR 3 is 5. In this example, the cookie information of the LSR 3 is as follows:
cookie (i, LSR3) (type = LSP_TUNNEL_IPV4, start cycle = 40, cycle num = 100, bandwidth = 10 M, interface = 5).

After adding the cookie information of the LSR 3 to the ipath message, the LSR 3 continues to forward the updated ipath message to a downstream node along the forwarding path. In this example, the LSR 3 sends the updated ipath message to the LSR 4.

S904. The LSR 4 parses the received ipath message, and generates an iResv message.

Specifically, after receiving the ipath message sent by the LSR 3, the LSR 4 parses the ipath message to learn that the destination address of the tunnel in the session object in the ipath message is the current node, namely, an IP address of the LSR 4, indicating that the LSR 4 is the egress edge node. As the egress edge node, the LSR 4 generates the iResv message based on information related to a resource request carried in the ipath message, where the iResv message carries the cookie information carried in ipath signaling. In this example, the iResv message carries the cookie information of the LSR 1, the cookie information of the LSR 2, and the cookie information of the LSR 3. The LSR 4 sends the iResv message to the LSR 1 (the ingress edge node) hop by hop in a reverse direction of the sending path of the ipath message.

As an example, a format of the iResv message is as follows:

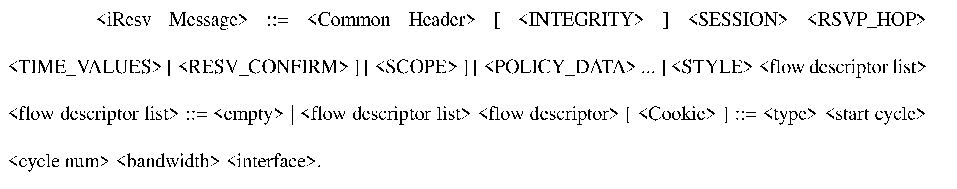

It should be understood that the iResv message includes a plurality of cookies [ <Cookie> ].

Specifically, the LSR 4 makes a resource reservation based on traffic characteristics carried in the ipath message, and stores actual resource reservation information in the cookie information of the iResv message and sends the iResv message to an upstream node. The resource reservation information herein includes a bandwidth of the reserved resource and a quantity of cycles occupied by the reserved resource.

Optionally, the actual resource reservation information determined by the LSR 4 may be consistent with the resource reservation information carried in the ipath message. In this case, the LSR 4 may directly add the cookie information carried in the ipath message to the iResv message.

Optionally, the actual resource reservation information determined by the LSR 4 is inconsistent with the resource reservation information carried in the ipath message. For example, the bandwidth of the actual reserved resource determined by the LSR 4 is inconsistent with the bandwidth of the reserved resource carried in the ipath message, and/or the quantity of cycles occupied by the actual reserved resource determined by the LSR 4 is inconsistent with the quantity of cycles occupied by the reserved resource carried in the ipath message. In this case, the LSR 4 needs to first modify, based on the determined actual resource reservation information, the bandwidth of the reserved resource and/or the quantity of cycles occupied by the reserved resource in the cookie information carried in the ipath message, and then generate the iResv message based on the modified cookie information, where the iResv message carries the modified cookie information.

S904. The LSR 4 sends the iResv message to the LSR 3.

The LSR 4 determines an upstream next-hop node based on path information carried in the ipath message, for example, determines, based on the sending interface 3 of the LSR 3 carried in the ipath message, that the upstream next-hop node is the LSR 3.

S905. The LSR 3 receives the iResv message, makes a resource reservation based on the iResv message, updates a locally maintained resource reservation state, and forwards the iResv message to the LSR 2.

The LSR 3 receives the iResv message, and parses the iResv message to obtain the cookie information of the LSR 3, where the cookie information of the LSR 3 is: cookie (i, LSR3) (type = LSP_TUNNEL_IPV4, start cycle = 40, cycle num = 100, bandwidth = 10 M, interface = 5).

The LSR 3 determines whether a total bandwidth of available resources of the LSR 3 is greater than 10 M. If yes, the LSR 3 reserves a 10 M resource in 100 cycles starting from a cycle 40, updates the locally maintained resource reservation state, and continues to forward the iResv message to the LSR 2. If no, the LSR 3 returns a path tear (Path Tear) message to the LSR 4.

S906. The LSR 2 receives the iResv message, makes a resource reservation based on the iResv message, updates a locally maintained resource reservation state, and forwards the iResv message to the LSR 1.

A process of processing the iResv message by the LSR 2 is similar to a process of processing the iResv message by the LSR 3. For brevity, details are not described herein again.

S907. After receiving the iResv message, the LSR 1 verifies that a resource reservation path is successfully established. Until now, a first-time resource reservation process for the data flow i is completed.

Optionally, when another resource reservation needs to be requested for the data flow i, a resource may be reserved for the data flow i again according to the process from S901 to S907. A difference lies in that, an rpath message is sent in the direction from the LSR 1 to the LSR 4, an rResv message is sent in the direction from the LSR 4 to the LSR 1, and a start cycle on each node is different from a start cycle in a previous resource reservation process. For details, refer to related descriptions in the foregoing embodiment.

After the resource reservation is completed, when the reserved resource needs to be released, the ingress edge node may send a teardown (Teardown) message to each core node on the path.

It can be learned from the foregoing description that, in this application, the node maintains the resource reservation states at a granularity of cycles, and the quantity K of cycles in which the node maintains the resource reservation states is configurable. Therefore, the quantity of resource reservation states maintained by the node is also configurable (that is, controllable), and does not depend on a quantity of data flows processed by the node, so that a performance requirement of a resource reservation for the node can be lowered, and network scalability can further be improved.

In the foregoing embodiment described with reference to FIG. 9, the path message and the Resv message carry a series of cookie information, that is, cookie information of each core node, as shown in FIG. 10.

The foregoing describes the method embodiments provided in the embodiments of this application, and the following describes apparatus embodiments provided in the embodiments of this application. It should be understood that descriptions of the apparatus embodiments correspond to the descriptions of the method embodiments. Therefore, for content that is not described in detail, refer to the foregoing method embodiments. For brevity, details are not described herein again.

Optionally, in this specification, a commercial product form of the ingress edge node may be an ingress gateway device, a commercial product form of the egress edge node may be an egress gateway device, and a main commercial product form of the core node (or the intermediate node, or the node in the method 300) is a router.

As shown in FIG. 11, an embodiment of this application provides a communications apparatus 1100. The communications apparatus 1100 may correspond to the node in the method 300 provided in the foregoing embodiment, or the core node in the foregoing method embodiment. As shown in FIG. 11, the communications apparatus 1100 includes:
a transceiver unit 1110, configured to receive a first message, where the first message carries a bandwidth value r1 of a resource requested to be reserved and a quantity Q1 of cycles occupied by the resource, the node maintains resource reservation states in K cycles, K is a positive integer, and Q1 is less than or equal to K; and
a processing unit 1120, configured to update resource reservation states in Q1 of the K cycles based on the bandwidth value r1 and the quantity Q1.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

Optionally, in some embodiments, a resource reservation state in each of the K cycles is determined based on a total bandwidth of resources that have been reserved by the node in each cycle.

Optionally, in some embodiments, the resource reservation state in each of the K cycles is the total bandwidth of the resources that have been reserved by the node in each cycle; and the processing unit 1120 is configured to add the bandwidth value r1 to a bandwidth value corresponding to a resource reservation state in each of the Q1 cycles.

Optionally, in some embodiments, the resource reservation state in each of the K cycles is a total bandwidth of remaining available resources of the node in each cycle; and the processing unit 1120 is configured to subtract the bandwidth value r1 from a bandwidth value corresponding to a resource reservation state in each of the Q1 cycles.

Optionally, in some embodiments, the processing unit 1120 is configured to update, based on the bandwidth value r1 and the quantity Q1, resource reservation states in Q1 cycles starting from a first start cycle in the K cycles, where the first start cycle is a cycle within which a start moment at which the node makes a resource reservation based on the first message falls.

Optionally, in some embodiments, the first start cycle is a current cycle when the node receives the first message.

Optionally, in some embodiments, the first message further carries information about the first start cycle.

Optionally, in some embodiments, the first message carries cookie information, and the cookie information includes: the bandwidth value r1, the quantity Q1, the first start cycle, and a sending interface of the node.

Optionally, in some embodiments, the transceiver unit 1110 is further configured to receive a second message, where the second message and the first message are associated with a same data flow, the second message carries information about a bandwidth value r2 of a resource requested to be reserved again and information about a quantity Q2 of cycles occupied by the resource, and Q2 is less than or equal to K; and the processing unit 1120 is further configured to update, based on the bandwidth value r2 and the quantity Q2, resource reservation states in Q2 cycles starting from a second start cycle in the K cycles, where the second start cycle is the (Q1)^{th} cycle after the first start cycle.

Optionally, in some embodiments, the processing unit 1120 is configured to: determine, based on the bandwidth value r1, the quantity Q1, and a resource reservation state of the node in the current cycle, whether the node supports a resource reservation; and when it is determined that the node supports a resource reservation, update the resource reservation states in the Q1 of the K cycles.

Optionally, in some embodiments, the processing unit 1120 is configured to: when a bandwidth value of a remaining available resource of the node in the current cycle is greater than or equal to the bandwidth value r1, determine that the node supports a resource reservation; or when a bandwidth value of a remaining available resource of the node in the current cycle is less than the bandwidth value r1, determine that the node does not support a resource reservation.

Optionally, in some embodiments, the first message is a reservation Resv message, and the Resv message comes from an egress edge node of a transmission path of a data flow for which a resource reservation is requested.

Optionally, in some embodiments, duration of the cycle is greater than or equal to an RTT of the transmission path of the data flow for which a resource reservation is requested. Before receiving the Resv message, the transceiver unit 1110 is further configured to receive a path path message from an ingress edge node of the transmission path; and the processing unit 1120 is further configured to update the path message, where the updated path message further carries the cookie information of the node, and the cookie information of the node includes: the bandwidth value r1, the quantity Q1, the first start cycle, and the sending interface of the node, where the first start cycle is the cycle within which the start moment at which the node makes a resource reservation falls.

As shown in FIG. 12, an embodiment of this application further provides a communications apparatus 1200. It should be understood that the communications apparatus 1200 may correspond to the communications apparatus 1100 in the foregoing embodiment, or may correspond to the core node in the foregoing method embodiment. As shown in FIG. 12, the communications apparatus 1200 includes a processor 1210, a memory 1220, and a transceiver 1230. The memory 1220 is configured to store an instruction. The processor 1210 is configured to indicate the instruction stored in the memory 1220, and execution of the instruction stored in the memory 1220 enables the processor 1210 to perform the method in the foregoing method embodiment, and enables the processor 1210 to control the transceiver 1230 to receive and send signals. Specifically, the transceiver 1230 is configured to receive a first message, where the first message carries a bandwidth value r1 of a resource requested to be reserved and a quantity Q1 of cycles occupied by the resource, the node maintains resource reservation state in K cycles, K is a positive integer, and Q1 is less than or equal to K. The processor 1210 is configured to update resource reservation states in Q1 of the K cycles based on the bandwidth value r1 and the quantity Q1.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

Optionally, in some embodiments, a resource reservation state in each of the K cycles is determined based on a total bandwidth of resources that have been reserved by the node in each cycle.

Optionally, in some embodiments, the resource reservation state in each of the K cycles is the total bandwidth of the resources that have been reserved by the node in each cycle; and the processor 1210 is configured to add the bandwidth value r1 to a bandwidth value corresponding to a resource reservation state in each of the Q1 cycles.

Optionally, in some embodiments, the resource reservation state in each of the K cycles is a total bandwidth of remaining available resources of the node in each cycle; and the processor 1210 is configured to subtract the bandwidth value r1 from a bandwidth value corresponding to a resource reservation state in each of the Q1 cycles.

Optionally, in some embodiments, the processor 1210 is configured to update, based on the bandwidth value r1 and the quantity Q1, resource reservation states in Q1 cycles starting from a first start cycle in the K cycles, where the first start cycle is a cycle within which a start moment at which the node makes a resource reservation based on the first message falls.

Optionally, in some embodiments, the first start cycle is a current cycle when the node receives the first message.

Optionally, in some embodiments, the first message further carries information about the first start cycle.

Optionally, in some embodiments, the first message carries cookie information, and the cookie information includes: the bandwidth value r1, the quantity Q1, the first start cycle, and a sending interface of the node.

Optionally, in some embodiments, the transceiver 1230 is further configured to receive a second message, where the second message and the first message are associated with a same data flow, the second message carries information about a bandwidth value r2 of a resource requested to be reserved again and information about a quantity Q2 of cycles occupied by the resource, and Q2 is less than or equal to K; and the processor 1210 is further configured to update, based on the bandwidth value r2 and the quantity Q2, resource reservation states in Q2 cycles starting from a second start cycle in the K cycles, where the second start cycle is the (Q1)^{th} cycle after the first start cycle.

Optionally, in some embodiments, the processor 1210 is configured to: determine, based on the bandwidth value r1, the quantity Q1, and a resource reservation state of the node in the current cycle, whether the node supports a resource reservation; and when it is determined that the node supports a resource reservation, update the resource reservation states in the Q1 of the K cycles.

Optionally, in some embodiments, the processor 1210 is configured to: when a bandwidth value of a remaining available resource of the node in the current cycle is greater than or equal to the bandwidth value r1, determine that the node supports a resource reservation; or when a bandwidth value of a remaining available resource of the node in the current cycle is less than the bandwidth value r1, determine that the node does not support a resource reservation.

Optionally, in some embodiments, the first message is a reservation Resv message, and the Resv message comes from an egress edge node of a transmission path of a data flow for which a resource reservation is requested.

Optionally, in some embodiments, before receiving the Resv message, the transceiver 1230 is further configured to receive a path path message from an ingress edge node of the transmission path; and the processor 1210 is further configured to update the path message, where the updated path message further carries the cookie information of the node, and the cookie information of the node includes: the bandwidth value r1, the quantity Q1, the first start cycle, and the sending interface of the node, where the first start cycle is the cycle within which the start moment at which the node makes a resource reservation falls.

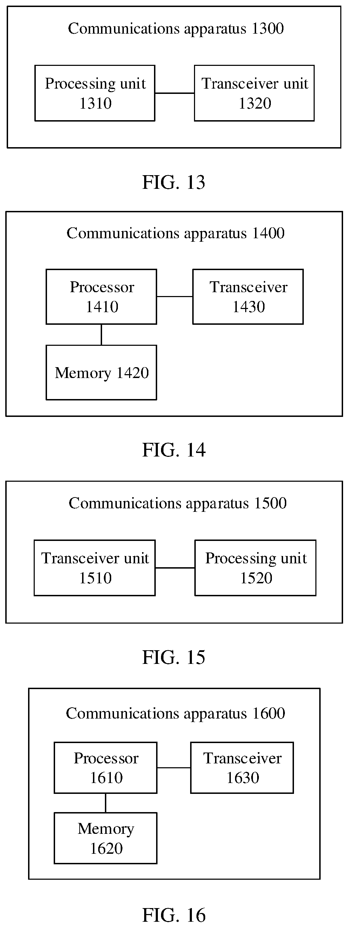

As shown in FIG. 13, an embodiment of this application further provides a communications apparatus 1300. The communications apparatus 1300 may correspond to the ingress edge node in the foregoing embodiment. As shown in FIG. 13, the communications apparatus 1300 includes:
a processing unit 1310, configured to generate a first path path message, where the first path message carries cookie information of the ingress edge node, and the cookie information of the ingress edge node includes: a bandwidth value r1 of a resource requested to be reserved, a quantity Q1 of cycles occupied by the resource requested to be reserved, a third start cycle of the resource requested to be reserved at the ingress edge node, and a sending interface of the ingress edge node; and
a transceiver unit 1320, configured to send the first path message to the core node.

The transceiver unit 1320 is further configured to receive a reservation Resv message sent by the core node, where the Resv message carries cookie information of each core node on the forwarding path, the cookie information of the core node includes: the bandwidth value r1 of the resource requested to be reserved, the quantity Q1 of cycles occupied by the resource requested to be reserved, a start cycle of the resource requested to be reserved at the core node, and a sending interface of the core node, and the core node maintains resource reservation states in K cycles, where K is a positive integer, and Q1 is less than or equal to K.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

Optionally, in some embodiments, the processing unit 1310 is further configured to detect validity of the Resv message, and if the Resv message is invalid, the transceiver unit 1320 is further configured to send a path tear message to the core node on the path.

Optionally, in some embodiments, the processing unit 1310 is further configured to generate a second path message, where the second path message and the first path message are associated with a same data flow, the second path message carries cookie information re-generated by the ingress edge node, and the cookie information re-generated by the ingress edge node includes: a bandwidth value r2 of a resource requested to be reserved again, a quantity Q2 of cycles occupied by the resource requested to be reserved again, a start cycle of the resource requested to be reserved again at the ingress edge node, and a sending interface of the ingress edge node, where the start cycle of the resource requested to be reserved again at the ingress edge node is a cycle following the last cycle indicated in the Resv message, and Q2 is less than or equal to K.

The transceiver unit 1320 is further configured to send the second path message to the core node.

As shown in FIG. 14, an embodiment of this application further provides a communications apparatus 1400. The communications apparatus 1400 corresponds to the communications apparatus 1300 in the foregoing embodiment, and further corresponds to the ingress edge node in the foregoing method embodiment. As shown in FIG. 14, the communications apparatus 1400 includes a processor 1410, a memory 1420, and a transceiver 1430. The memory 1420 is configured to store an instruction. The processor 1410 is configured to indicate the instruction stored in the memory 1420, and execution of the instruction stored in the memory 1420 enables the processor 1410 to perform an action performed by the processing unit 1310 in the foregoing embodiment. The transceiver 1430 is configured to perform an action performed by the transceiver unit 1320 in the foregoing embodiment.

As shown in FIG. 15, an embodiment of this application further provides a communications apparatus 1500. The communications apparatus 1500 may correspond to the ingress edge node in the foregoing embodiment. As shown in FIG. 15, the communications apparatus 1500 includes:
a transceiver unit 1510, configured to receive a path path message sent by a core node, where the path message carries cookie information of each node on the forwarding path, the cookie information of the core node includes: a bandwidth value r1 of a resource requested to be reserved, a quantity Q1 of cycles occupied by the resource requested to be reserved, a start cycle of the resource requested to be reserved at the core node, and a sending interface of the core node, and the core node maintains resource reservation states in K cycles, where K is a positive integer, and Q1 is less than or equal to K; and
a processing unit 1520, configured to generate a Resv message based on the path message, where the Resv message carries the same cookie information as the path message.

The transceiver unit 1510 is further configured to send the Resv message to the core node.

In this application, the node maintains the resource reservation states at a granularity of cycles, and the quantity K of cycles in which the node maintains the resource reservation states is configurable. Therefore, a quantity of resource reservation states maintained by the node is also configurable (that is, controllable), and does not depend on a quantity of data flows processed by the node, so that a performance requirement of a resource reservation for the node can be lowered, and network scalability can further be improved.

As shown in FIG. 16, an embodiment of this application further provides a communications apparatus 1600. The communications apparatus 1600 corresponds to the communications apparatus 1500 in the foregoing embodiment, and further corresponds to the egress edge node in the foregoing method embodiment. As shown in FIG. 16, the communications apparatus 1600 includes a processor 1610, a memory 1620, and a transceiver 1630. The memory 1620 is configured to store an instruction. The processor 1610 is configured to indicate the instruction stored in the memory 1620, and execution of the instruction stored in the memory 1620 enables the processor 1610 to perform an action performed by the processing unit 1520 in the foregoing embodiment. The transceiver 1630 is configured to perform an action performed by the transceiver unit 1510 in the foregoing embodiment.

An embodiment of this application further provides a computer readable storage medium. A computer program is stored on the computer readable storage medium, and when the computer program is executed by a computer, the computer is enabled to implement the method provided in the foregoing method embodiment.

An embodiment of this application further provides a computer program product including an instruction. When the instruction is executed by a computer, the computer is enabled to implement the method provided in the foregoing method embodiment.

For explanations and beneficial effects of related content in any communications apparatus provided above, refer to a corresponding method embodiment provided above. Details are not described herein again.

It should be understood that, the processor in the embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), or a field programmable gate array (Field Programmable Gate Array, FPGA), or another programmable logic device, discrete gate, transistor logic device, discrete hardware component, or the like. The general-purpose processor may be a microprocessor, or the processor may be any conventional processor or the like.

It should further be understood that the memory in the embodiments of this application may be a volatile memory or a non-volatile memory, or may include a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) and is used as an external cache. Illustratively instead of restrictively, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate, transistor logic device, or discrete hardware component, the memory (storage module) is integrated into the processor.

It should be noted that the memory described in this specification is intended to include but is not limited to these memories and any other proper type of memory.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented using some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource reservation method, comprising:
receiving, by a node, a first message, wherein the first message carries a bandwidth value r1 of a resource requested to be reserved and a quantity Q1 of cycles occupied by the resource, the node maintains resource reservation states in K cycles, K is a positive integer, and Q1 is less than or equal to K; and
updating, by the node, resource reservation states in Q1 of the K cycles based on the bandwidth value r1 and the quantity Q1.

2. The method according to claim 1, wherein a resource reservation state in each of the K cycles is determined based on a total bandwidth of resources that have been reserved by the node in each cycle.

3. The method according to claim 2, wherein the resource reservation state in each of the K cycles is the total bandwidth of the resources that have been reserved by the node in each cycle; and
the updating, by the node, resource reservation states in Q1 of the K cycles based on the bandwidth value r1 and the quantity Q1 comprises:
adding, by the node, the bandwidth value r1 to a bandwidth value corresponding to a resource reservation state in each of the Q1 cycles.

4. The method according to claim 2, wherein the resource reservation state in each of the K cycles is a total bandwidth of remaining available resources of the node in each cycle; and
the updating, by the node, resource reservation states in Q1 of the K cycles based on the bandwidth value r1 and the quantity Q1 comprises:
subtracting, by the node, the bandwidth value r1 from a bandwidth value corresponding to a resource reservation state in each of the Q1 cycles.

5. The method according to any one of claims 1 to 4, wherein the updating, by the node, resource reservation states in Q1 of the K cycles based on the bandwidth value r1 and the quantity Q1 comprises:
updating, by the node based on the bandwidth value r1 and the quantity Q1, resource reservation states in Q1 cycles starting from a first start cycle in the K cycles, wherein the first start cycle is a cycle within which a start moment at which the node makes a resource reservation based on the first message falls.

6. The method according to claim 5, wherein the first start cycle is a current cycle when the node receives the first message.

7. The method according to claim 5 or 6, wherein the first message further carries information about the first start cycle.

8. The method according to any one of claims 5 to 7, wherein the first message carries cookie cookie information, and the cookie information comprises: the bandwidth value r1, the quantity Q1, the first start cycle, and a sending interface of the node.

9. The method according to claim 7 or 8, wherein the method further comprises:
receiving, by the node, a second message, wherein the second message and the first message are associated with a same data flow, the second message carries information about a bandwidth value r2 of a resource requested to be reserved again and information about a quantity Q2 of cycles occupied by the resource, and Q2 is less than or equal to K; and
updating, by the node based on the bandwidth value r2 and the quantity Q2, resource reservation states in Q2 cycles starting from a second start cycle in the K cycles, wherein the second start cycle is the (Q1)^{th} cycle after the first start cycle.

10. The method according to any one of claims 1 to 9, wherein the updating, by the node, resource reservation states in Q1 of the K cycles based on the bandwidth value r1 and the quantity Q1 comprises:
determining, by the node based on the bandwidth value r1, the quantity Q1, and a resource reservation state of the node in the current cycle, whether the node supports a resource reservation; and
when it is determined that the node supports a resource reservation, updating the resource reservation states in the Q1 of the K cycles.

11. The method according to claim 10, wherein the determining, by the node based on the bandwidth value r1, the quantity Q1, and a resource reservation state of the node in the current cycle, whether the node supports a resource reservation comprises:
when a bandwidth value of a remaining available resource of the node in the current cycle is greater than or equal to the bandwidth value r1, determining that the node supports a resource reservation; or
when a bandwidth value of a remaining available resource of the node in the current cycle is less than the bandwidth value r1, determining that the node does not support a resource reservation.

12. The method according to any one of claims 1 to 11, wherein the first message is a reservation Resv message, and the Resv message comes from an egress edge node of a transmission path of a data flow for which a resource reservation is requested.

13. The method according to claim 12, wherein before the node receives the Resv message, the method further comprises:
receiving, by the node, a path path message from an ingress edge node of the transmission path; and
updating, by the node, the path message, wherein the updated path message further carries the cookie information of the node, and the cookie information of the node comprises: the bandwidth value r1, the quantity Q1, the first start cycle, and the sending interface of the node, wherein the first start cycle is the cycle within which the start moment at which the node makes a resource reservation falls.

14. A communications apparatus, comprising:
a transceiver unit, configured to receive a first message, wherein the first message carries a bandwidth value r1 of a resource requested to be reserved and a quantity Q1 of cycles occupied by the resource, the node maintains resource reservation states in K cycles, K is a positive integer, and Q1 is less than or equal to K; and
a processing unit, configured to update resource reservation states in Q1 of the K cycles based on the bandwidth value r1 and the quantity Q1.

15. The communications apparatus according to claim 14, wherein a resource reservation state in each of the K cycles is determined based on a total bandwidth of resources that have been reserved by the node in each cycle.

16. The communications apparatus according to claim 15, wherein the resource reservation state in each of the K cycles is the total bandwidth of the resources that have been reserved by the node in each cycle; and
the processing unit is specifically configured to add the bandwidth value r1 to a bandwidth value corresponding to a resource reservation state in each of the Q1 cycles.

17. The communications apparatus according to claim 15, wherein the resource reservation state in each of the K cycles is a total bandwidth of remaining available resources of the node in each cycle; and
the processing unit is specifically configured to subtract the bandwidth value r1 from a bandwidth value corresponding to a resource reservation state in each of the Q1 cycles.

18. The communications apparatus according to any one of claims 14 to 17, wherein the processing unit is specifically configured to update, based on the bandwidth value r1 and the quantity Q1, resource reservation states in Q1 cycles starting from a first start cycle in the K cycles, wherein the first start cycle is a cycle within which a start moment at which the node makes a resource reservation based on the first message falls.

19. The communications apparatus according to claim 18, wherein the first start cycle is a current cycle when the node receives the first message.

20. The communications apparatus according to claim 18 or 19, wherein the first message further carries information about the first start cycle.

21. The communications apparatus according to any one of claims 18 to 20, wherein the first message carries cookie cookie information, and the cookie information comprises: the bandwidth value r1, the quantity Q1, the first start cycle, and a sending interface of the node.

22. The communications apparatus according to claim 20 or 21, wherein the transceiver unit is further configured to receive a second message, wherein the second message and the first message are associated with a same data flow, the second message carries information about a bandwidth value r2 of a resource requested to be reserved again and information about a quantity Q2 of cycles occupied by the resource, and Q2 is less than or equal to K; and
the processing unit is further configured to update, based on the bandwidth value r2 and the quantity Q2, resource reservation states in Q2 cycles starting from a second start cycle in the K cycles, wherein the second start cycle is the (Q1)^{th} cycle after the first start cycle.

23. The communications apparatus according to any one of claims 14 to 22, wherein the processing unit is specifically configured to:
determine, based on the bandwidth value r1, the quantity Q1, and a resource reservation state of the node in the current cycle, whether the node supports a resource reservation; and
when it is determined that the node supports a resource reservation, update the resource reservation states in the Q1 of the K cycles.

24. The communications apparatus according to claim 23, wherein the processing unit is configured to:
when a bandwidth value of a remaining available resource of the node in the current cycle is greater than or equal to the bandwidth value r1, determine that the node supports a resource reservation; or
when a bandwidth value of a remaining available resource of the node in the current cycle is less than the bandwidth value r1, determine that the node does not support a resource reservation.

25. The communications apparatus according to any one of claims 14 to 24, wherein the first message is a reservation Resv message, and the Resv message comes from an egress edge node of a transmission path of a data flow for which a resource reservation is requested.

26. The communications apparatus according to claim 25, wherein before receiving the Resv message, the transceiver unit is further configured to receive a path path message from an ingress edge node of the transmission path; and
the processing unit is further configured to update the path message, wherein the updated path message further carries the cookie information of the node, and the cookie information of the node comprises: the bandwidth value r1, the quantity Q1, the first start cycle, and the sending interface of the node, wherein the first start cycle is the first start cycle is the cycle within which the start moment at which the node makes a resource reservation falls.
